Europäisches Patentamt

European Patent Office

Office européen des brevets

(19)

(11) Veröffentlichungsnummer: **0 118 799**
A2

(12) # EUROPÄISCHE PATENTANMELDUNG

(21) Anmeldenummer: **84101651.2**

(22) Anmeldetag: **17.02.84**

(51) Int. Cl.³: **H 04 B 3/28**
H 03 F 1/34

(30) Priorität: **05.03.83 DE 3307849**

(43) Veröffentlichungstag der Anmeldung:
**19.09.84 Patentblatt 84/38**

(84) Benannte Vertragsstaaten:
**DE FR NL**

(71) Anmelder: **Schaltbau Gesellschaft mbH**
**Klausenburger Strasse 6**
**D-8000 München 80(DE)**

(72) Erfinder: **Junck, Rainer, Dipl.-Ing.**
**Am Lilienberg 4**
**D-8000 München 80(DE)**

(74) Vertreter: **Schneider, Wilhelm**
**c/o kabelmetal electro GmbH Kabelkamp 20 Postfach 260**
**D-3000 Hannover 1(DE)**

(54) Schaltung für einen Leistungsverstärker.

(57) In einer Schaltung für einen Leistungsverstärker für
aktiven Reduktionsschutz wird der Ausgang des Leistungsverstärkers sowohl auf die Primärwicklung als auch auf eine
Hilfswicklung des Koppeltransformators gelegt und über die
Hilfswicklung und einen invertierenden Hilfsverstärker wieder an den Eingang des Leistungsverstärkers. Dies dient
dazu, den durch die Rückkopplung verbesserten Reduktionsfaktor beizubehalten und dennoch hinter dem Koppeltransformator anstehende Störsignale von wenigen Hz vom
Leistungsverstärker fernzuhalten.

EP 0 118 799 A2

Croydon Printing Company Ltd.

Schaltbau Gesellschaft mbH
München

SB 223

4. März 1983

## Schaltung für einen Leistungsverstärker

Gegenstand der Erfindung ist eine Schaltung für einen Leistungsverstärker mit zwei Eingängen zur Speisung eines Koppeltransformators für den aktiven Reduktionsschutz von Fernmeldeleitungen, wobei die Schaltung für einen vorgegebenen Bereich von störenden Frequenzen ausgelegt ist und Mittel zur Kompensation sehr tiefer, außerhalb des vorgegebenen Bereichs liegender Frequenzen aufweist und der Koppeltransformator mit einer Hilfswicklung versehen ist.

Die DE-OS 29 26 092 hat eine Verstärkerschaltung für den aktiven Reduktionsschutz von Fernmeldeleitungen zum Gegenstand, bei der die Pilotader über eine Hilfswicklung des Koppeltransformators geführt wird. Zur Erfassung der in den Leitungswiderständen und dem Koppeltransformator auftretenden Phasenverschiebungen wird nach dieser Offenlegungsschrift das hinter dem Koppeltransformator an der Hilfswicklung anstehende Störsignal über einen Hilfsverstärker dem zweiten Eingang des Leistungsverstärkers zugeführt, der seinerseits die Primärwicklung des Koppeltransformators speist. Dadurch wird eine erhebliche Steigerung des Reduktionsfaktors erreicht. Diese Schaltungen sind gewöhnlich für Störsignale von 16 2/3 Hz bis zu etwa 4 kHz ausgelegt. Treten nun Störsignale von nur wenigen Hz auf und gelangen diese in den Verstärker, so kann der Koppeltransformator in die Sättigung gelangen und als Kurzschluß wirken. Dann spricht im Leistungsverstärker die Überstrombegrenzung an. Dadurch treten auf den zu schützenden Leitungen Störspitzen auf, deren Amplitude

...

0118799

unter Umständen größer sein kann als die der eigentlichen Störung. Außerdem wird die Endstufe des Verstärkers unzulässig überlastet. Aus der deutschen Patentanmeldung P 32 45 863.0 ist es bekannt, die an der Pilotader anstehenden Störsignale von nur wenigen Hz einem invertierenden Tiefpaß zuzuleiten und dessen Ausgang zusammen mit der Pilotader auf den Eingang eines Summierverstärkers zu legen und dessen Ausgang dem Leistungsverstärker zuzuführen. In dem Summierverstärker werden so die Störsignale von nur wenigen Hz herauskompensiert und gelangen nicht in den Leistungsverstärker. Da sie aber auch hinter dem Koppeltransformator an der Pilotader anstehen, können sie bei Schaltungen nach der DE-OS 29 26 092 noch über den Hilfsverstärker in den zweiten Eingang des Leistungsverstärkers gelangen. Für solche Schaltungen ist nach der deutschen Patentanmeldung P 32 45 863.0 ein Analogschalter vorgesehen, der beim Ansprechen des Tiefpasses den Hilfsverstärker vom Leistungsverstärker trennt. Dies hat den Nachteil, daß für die Zeit des Auftretens der Störsignale von nur wenigen Hz die verbesserte Reduktion nach der DE-OS 29 26 092 aufgehoben ist.

Der Erfindung liegt die Aufgabe zugrunde, eine Schaltung der vorstehend beschriebenen Art anzugeben, die es erlaubt, die Störsignale von nur wenigen Hz von dem Leistungsverstärker fernzuhalten und dennoch den günstigeren Reduktionsfaktor wenigstens annähernd beizubehalten.

Gemäß der Erfindung geschieht dies dadurch, daß der Ausgang des Leistungsverstärkers sowohl an die Primärwicklung als auch an die Hilfswicklung gelegt und über diese und einen invertierenden Hilfsverstärker an den Eingang des Leistungsverstärkers gelegt wird.

Die erfindungsgemäße Schaltung hat den wesentlichen Vorteil, daß der Reduktionsfaktor von dem Auftreten von Störsignalen mit nur wenigen Hz unberührt bleibt. Sie kann mit Vorteil an den Enden einer Fernmeldeleitung, zum Beispiel beim Eintritt eines Fernsprechkabels in eine Verteilerstelle, angewendet werden.

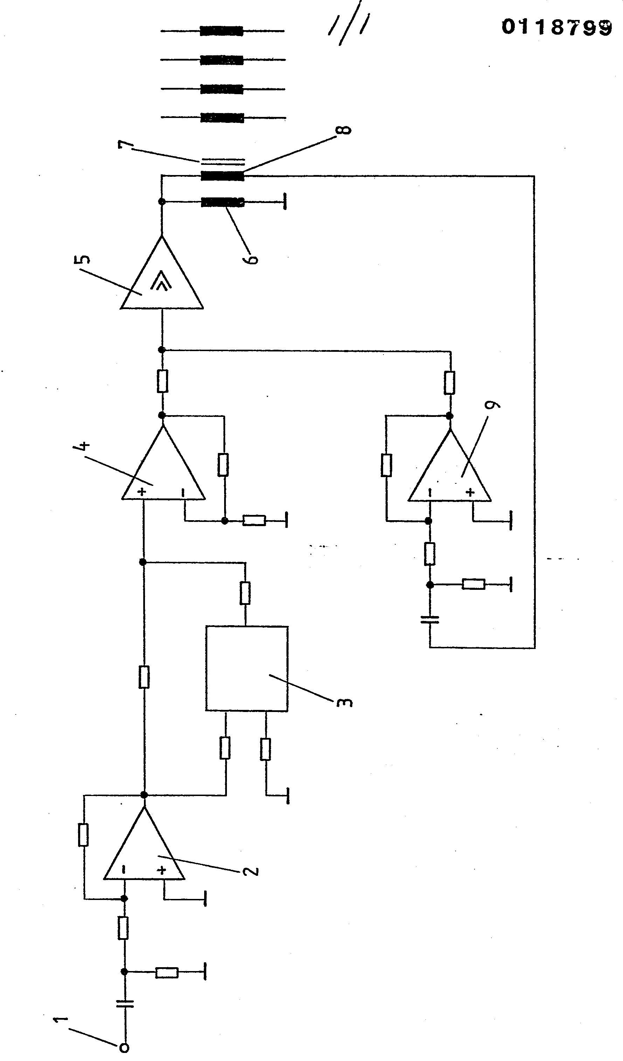

Die Figur zeigt in zum Teil schematischer Darstellung ein Ausführungsbeispiel einer Schaltung nach der Lehre der Erfindung.

...

0118799

Mit 1 ist der Eingang der Pilotader in die Schaltung bezeichnet. Sie führt dem Vorverstärker 2 alle Störsignale zu, darunter auch die von nur wenigen Hz. Diese letzteren werden aber einmal direkt und zum anderen über den invertierenden Tiefpaß 3 dem Eingang des Summierverstärkers 4 zugeführt, so daß an dessen Ausgang die Signale mit nur wenigen Hz nicht mehr auftreten. An den einen Eingang des Leistungsverstärkers 5 gelangen somit nur die sonstigen Störsingale. Erfindungsgemäß wird nun der Ausgang des Leistungsverstärkers 5 nicht nur an die Primärwicklung 6 des Koppeltransformators 7, sondern auch an dessen Hilfswicklung 8 gelegt. Das verbleibende, in der Hilfswicklung 8 reduzierte Störsignal wird aus der Hilfswicklung 8 über den Hilfsverstärker 9 ebenfalls an den Eingang des Leistungsverstärkers 5 gelegt.

Schaltbau Gesellschaft mbH
München

SB 223
4. März 1983

Patentanspruch

Schaltung für einen Leistungsverstärker zur Speisung eines Koppeltransformators für den aktiven Reduktionsschutz von Fernmeldeleitungen, wobei die Schaltung für einen vorgegebenen Bereich von störenden Frequenzen ausgelegt ist und Mittel zur Kompensation sehr tiefer, außerhalb des vorgegebenen Bereichs liegender Frequenzen aufweist und der Koppeltransformator mit einer Hilfswicklung versehen ist, dadurch gekennzeichnet, daß der Ausgang des Leistungsverstärkers (5) sowohl an die Primärwicklung (6) als auch an die Hilfswicklung (8) gelegt und über diese und einen invertierenden Hilfsverstärker (9) an den Eingang des Leistungsverstärkers (5) gelegt wird.